# EUROPEAN PATENT SPECIFICATION

(11) **EP 3 493 445 B1**
(45) Date of publication and mention of the grant of the patent: **09.09.2020**
(21) Application number: 17922072.8
(22) Date of filing: 11.09.2017
(51) Int. Cl.: H04L 1/16, H04L 1/18, H04L 5/00, H04L 1/00

(54) **RESOURCE ALLOCATION METHOD AND TERMINAL**
RESSOURCENZUWEISUNGSVERFAHREN UND ENDGERÄT
PROCÉDÉ D'ATTRIBUTION DE RESSOURCES ET TERMINAL

(43) Date of publication of application: 05.06.2019
(60) Divisional application: 20188439.2
(73) Proprietor: GUANGDONG OPPO MOBILE TELECOMMUNICATIONS CORP., LTD., Wusha, Chang'an Dongguan, Guangdong 523860 (CN)
(72) Inventor: LIN, Yanan, Dongguan Guangdong 523860 (CN)
(74) Representative: Manitz Finsterwald Patent- und Rechtsanwaltspartnerschaft mbB
(86) International application number: PCT/CN2017/101303
(87) International publication number: WO 2019/047243

(56) References cited:
- WO-A1-2017/049463
- WO-A2-2012/015212
- CN-A- 102 111 254
- CN-A- 103 873 212
- CN-A- 106 549 734
- LG ELECTRONICS: "Design of short NR-PUCCH for up to 2 UCI bits", 3GPP DRAFT; R1-1713174, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech Republic; 20170821 - 20170825 20 August 2017 (2017-08-20), XP051315983, Retrieved from the Internet: URL:http://www.3gpp.org/ftp/Meetings_3GPP_ SYNC/RAN1/Docs/ [retrieved on 2017-08-20]
- ZTE: "NR PUCCH resource allocation", 3GPP DRAFT; R1-1712454 NR PUCCH RESOURCE ALLOCATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czechia; 20170821 - 20170825 20 August 2017 (2017-08-20), XP051315270, Retrieved from the Internet: URL:http://www.3gpp.org/ftp/Meetings_3GPP_ SYNC/RAN1/Docs/ [retrieved on 2017-08-20]

## Description

### TECHNICAL FIELD

The present invention relates to wireless communication technologies and, in particular, to a resource allocation method, a terminal, a network device, and a computer storage medium.

### BACKGROUND

In a current 5G communication system, a physical uplink control channel (Physical Uplink Control Channel, PUCCH) of two time lengths is supported, including a short PUCCH (short-PUCCH) and a long PUCCH (long-PUCCH). The short PUCCH includes 1 or 2 time domain symbols, and the long PUCCH includes 4 to 14 time domain symbols.

When the short PUCCH is used to transmit no more than 2 bits of feedback information, the current working assumption (Working Assumption) aims to use a sequence selection mode to transmit the short PUCCH, that is, different sequences distinguish feedback information content. For acknowledgement/non-acknowledgement (ACK/NACK) information, the feedback information content is determined according to different feedback sequences. For example, when the feedback information is a 1-bit ACK/NACK, the terminal determines two transmission sequences, where the sequence 1 corresponds to an ACK, and the sequence 2 corresponds to a NACK. The network device determines the feedback information content of the terminal according to a received sequence. Correspondingly, when the feedback information is a 2-bit ACK/NACK, the terminal determines 4 transmission sequences.

When the terminal's semi-static configuration uses 2 codewords to transmit downlink data, it indicates that the terminal receives downlink control signaling to determine that 1 or 2 codewords are included in the downlink data of the current scheduling. There is currently no effective solution with regard to how to determine, according to the number of currently scheduled codewords, an appropriate sequence to transmit the ACK/NACK corresponding to the the downlink data.

WO2017/049463A1 discloses a method and device for transmitting UCI in carrier aggregation.

LG ELECTRONICS: "Design of short NR-PUCCH for up to 2 UCI bits" (3GPP ORAFT; R1-1713174, 3RD GENERATION PARTNERSHIP PROJECT (3GPP), MOBILE COMPETENCE CENTRE ; 650, ROUTE OES LUCIOLES ; F-06921 SOPHIA-ANTIPOLIS CEOEX; FRANCE, vol. RAN WG1, no. Prague, Czech Republic; 20170821 - 20170825 20 August 2017 (2017-08-20)) discloses a design of 1-symbol UL control channel in NR for up to 2 UCI bits.

### SUMMARY

In order to solve the existing technical problem, the embodiments of the present invention provide a resource allocation method, a terminal, a network device, and a computer storage medium.

In order to achieve the above objective, the technical solutions in the embodiments of the present invention are implemented as follows:
Embodiments of the present invention provide a resource allocation method for the transmission of ACK/NACK feedback information on a short Physical Uplink Control Channel, PUCCH, in a 5G communications system, where the method includes: receiving, by a terminal, downlink control signaling, and determining, based on a number of codewords scheduled by the downlink control signaling, a first number of sequence resources, where the first number is related to the number of scheduled codewords, and a maximum number of codewords for the terminal to transmit downlink data is N which is a positive integer greater than 1; and
transmitting, by the terminal, feedback information using a sequence resource in the first number of sequence resources;
where the first number being related to the number of scheduled codewords includes:
   the first number is equal to 2^{M}, where M is the number of scheduled codewords;
   where before the receiving, by the terminal, the downlink control signaling, the method further includes:
      receiving, by the terminal, signaling sent by a network device, and determining, based on the signaling, at least one sequence resource set, where a number of sequence resources included in at least part of the at least one sequence resource set is related to the maximum number of codewords;
      where the number of sequence resources included in each of at least part of sequence resource sets being related to the maximum number of codewords includes:
         the number of sequence resources included in each of at least part of sequence resource sets is 2^{N}, where N is the maximum number of codewords;
         where the maximum number of codewords for the terminal refers to a maximum number of codewords for downlink data transmission according to a semi-static configuration of the terminal;
         where the terminal determines a sequence resource subset out of one of the at least one sequence resource set based on a pre-agreed rule or based on an indication from the downlink control signaling, where the sequence resource subset contains a number of sequence resources equal to the first number;
         where the terminal transmits the ACK/NACK feedback information using a sequence resource from the sequence resource subset.

In an embodiment, the determining the first number of sequence resources includes:
determining, by the terminal, one of the at least one sequence resource set based on a signaling indication from the network device; and
determining, by the terminal, the first number of sequence resources in the one sequence resource set.

In an embodiment, the determining the first number of sequence resources includes: determining, by the terminal, the first number of sequence resources from the sequence resource set based on a signaling indication from the network device; or
determining, by the terminal, the first number of sequence resources from the sequence resource set based on a preset convention.

In an embodiment, the determining the first number of sequence resources includes:
dividing the sequence resource set into at least two groups of sequence resource subsets, where each group of sequence resource subsets includes the first number of sequence resources; and
selecting, by the terminal, a group of sequence resource subsets from the at least two groups of sequence resource subsets according to specific parameters.

In an embodiment, the specific parameters include: terminal identification, and network device signaling.

In an embodiment, the at least one sequence resource set includes a first part of sequence resource sets, and the number of sequence resources included in the first part of sequence resource sets is equal to the first number.

In an embodiment, the receiving, by the terminal, the signaling sent by the network device and the determining, based on the signaling, the at least one sequence resource set include:
receiving, by the terminal, downlink control signaling from the network device, and determining, based on the downlink control signaling, the at least one sequence resource set.

In an embodiment, the receiving, by the terminal, the signaling sent by the network device and the determining, based on the signaling, the at least one sequence resource set include:
receiving, by the terminal, high layer signaling from the network device, and determining, based on the high layer signaling, the at least one sequence resource set.

In an embodiment, the determining the first number of sequence resources includes:
determining, by the terminal, the first number of sequence resources according to a preset sequence resource.

In an embodiment, the determining, by the terminal, the first number of sequence resources according to the preset sequence resource includes: using, by the terminal, the preset sequence resource as a starting sequence resource, and determining a sequence resource every second number of sequence resources starting from the starting sequence resource.

In an embodiment, the method further includes: determining, by the terminal, the starting sequence resource according to a signaling indication from a network device.

An embodiment of the present invention further provides a terminal for the transmission of ACK/NACK feedback information on a short Physical Uplink Control Channel, PUCCH, in a 5G communications system, including: a signaling receiving unit, a resource determining unit, and a transmitting unit;
the signaling receiving unit is configured to receive downlink control signaling;
the resource determining unit is configured to determine, based on a number of codewords scheduled by the downlink control signaling received by the signaling receiving unit, a first number of sequence resources, where the first number is related to the number of scheduled codewords, and a maximum number of codewords for the terminal to transmit downlink data is N which is a positive integer greater than 1; and
the transmitting unit is configured to transmit feedback information using a sequence resource in the first number of sequence resources determined by the resource determining unit;
where the first number being related to the number of scheduled codewords includes:
the first number is equal to 2^{M}, where M is the number of scheduled codewords;
where the signaling receiving unit (31) is further configured to receive signaling sent by a network device before receiving the downlink control signaling; and
the resource determining unit (32) is further configured to determine, based on the signaling received by the signaling receiving unit (31), at least one sequence resource set, where a number of sequence resources included in at least part of the at least one sequence resource set is related to the maximum number of codewords;
where the number of sequence resources included in each of at least part of sequence resource sets is 2^{N}, where N is the maximum number of codewords;
where the maximum number of codewords for the terminal refers to a maximum number of codewords for downlink data transmission according to a semi-static configuration of the terminal;
where the terminal determines a sequence resource subset out of one of the at least one sequence resource set based on a pre-agreed rule or based on an indication from the downlink control signaling, where the sequence resource subset contains a number of sequence resources equal to the first number;
where the terminal transmits the ACK/NACK feedback information using a sequence resource from the sequence resource subset.

In an embodiment, the resource determining unit is configured to determine, based on a signaling indication from the network device, one of the at least one sequence resource set; and determine the first number of sequence resources in the one sequence resource set.

In an embodiment, the resource determining unit is configured to determine the first number of sequence resources from the sequence resource set based on a signaling indication from the network device; or determine the first number of sequence resources from the sequence resource set based on a preset convention.

In an embodiment, the resource determining unit is configured to divide sequence resources in the sequence resource set into at least two groups to generate at least two groups of sequence resource subsets, where each group of sequence resource subsets includes the first number of sequence resources; and select a group of sequence resource subsets from the at least two groups of sequence resource subsets according to specific parameters.

In an embodiment, the specific parameters include: terminal identification, and network device signaling.

In an embodiment, the at least one sequence resource set includes a first part of sequence resource sets, and the number of sequence resources included in the first part of sequence resource sets is equal to the first number.

In an embodiment, the signaling receiving unit is configured to receive downlink control signaling from the network device;
the resource determining unit is configured to determine, based on the downlink control signaling received by the signaling receiving unit, the at least one sequence resource set.

In an embodiment, the signaling receiving unit is configured to receive high layer signaling from the network device; and
the resource determining unit is configured to determine, based on the high layer signaling received by the signaling receiving unit, he at least one sequence resource set.

In an embodiment, the resource determining unit is configured to determine the first number of sequence resources according to a preset sequence resource.

In an embodiment, the resource determining unit is configured to use the preset sequence resource as a starting sequence resource, and determine a sequence resource every second number of sequence resources starting from the starting sequence resource.

In an embodiment, the resource determining unit is configured to determine the starting sequence resource according to a signaling indication received by the signaling receiving unit from a network device.

The technical solutions in the embodiments of the present invention are used to determine an appropriate sequence resource based on the number of scheduled codewords so that the terminal can transmit feedback information based on the determined sequence resource.

### BRIEF DESCRIPTION OF DRAWINGS

FIG. 1 is a schematic flowchart of a resource allocation method according to Embodiment 1 of the present invention;
FIG. 2 is a schematic flowchart of a resource allocation method according to Embodiment 2 of the present invention;
FIG. 3 is a schematic flowchart of a resource allocation method according to Embodiment 3 of the present invention;
FIG. 4 is a schematic structural diagram illustrating composition of a terminal according to an embodiment of the present invention;
FIG. 5 is a schematic structural diagram illustrating hardware of a terminal according to an embodiment of the present invention;
FIG. 6 is a schematic flowchart of a resource allocation method according to Embodiment 4 of the present invention; and
FIG. 7 is a schematic structural diagram illustrating composition of a network device according to an embodiment of the present invention.

### DETAILED DESCRIPTION OF EMBODIMENTS

The present invention will be further described in detail below with reference to the accompanying drawings and specific embodiments. The scope of the invention is defined in the appended claims. Any reference to "embodiment(s)" or "aspect(s) of the invention" in this description not falling under the scope of the claims should be interpreted as illustrative example(s) for understanding the invention.

### Embodiment 1

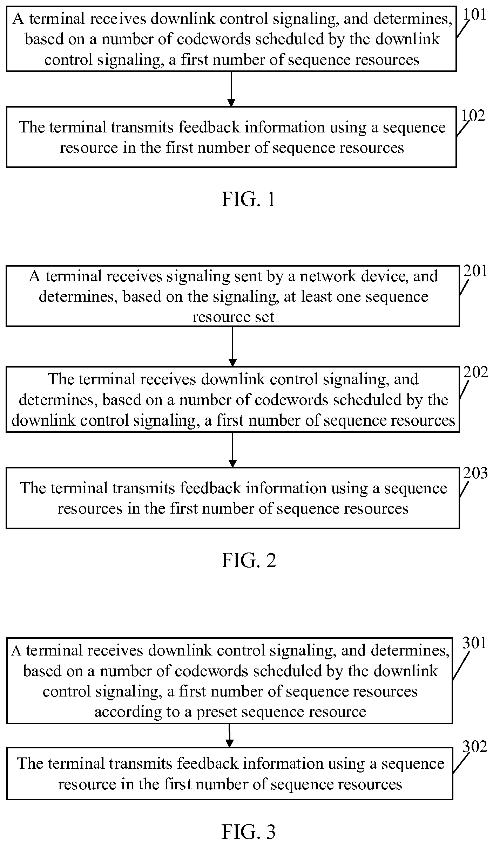

An embodiment of the present invention provides a resource allocation method. FIG. 1 is a schematic flowchart of a resource allocation method according to Embodiment 1 of the present invention; as shown in FIG. 1, the method includes:
Step 101: a terminal receives downlink control signaling, and determines, based on a number of codewords scheduled by the downlink control signaling, a first number of sequence resources.
Step 102: the terminal transmits feedback information using a sequence resource in the first number of sequence resources.

In this embodiment, a maximum number of codewords for the terminal to transmit downlink data by is N which is a positive integer greater than 1, indicating that the terminal can transmit downlink data using up to N codewords at the same time, but not always using N codewords, and the downlink data can be transmitted using a codeword of any value between 1 and N. For example, when the terminal's semi-static configuration uses 2 codewords to transmit downlink data, it indicates that the terminal can transmit downlink data using up to 2 codewords at the same time, and the terminal receives downlink control signaling to determine that 1 or 2 codewords are included in the scheduled downlink data.

In this embodiment, the first number is related to the number of scheduled codewords. As an implementation, the first number is equal to 2^{M}, where M is the number of scheduled codewords, for example, if the number of scheduled codewords is 1, the first number of sequence resources is 2; for another example, if the number of scheduled codewords is 2, the first number of sequence resources is 4.

In an actual application, there may be multiple sequence resources to be determined by the terminal; the terminal may determine, from the multiple sequence resources, the first number of sequence resources based on the number of codewords scheduled by the downlink control signaling. As an implementation, the terminal may determine, from the multiple sequence resources, the first number of sequence resources based on a preset convention; for example, the multiple sequence resources are numbered, if the number of scheduled codewords is 1, determine 2 sequence resources, a first sequence resource and a third sequence resource, or a second sequence resource and a fourth sequence resource may be selected from the multiple sequence resources based on a preset convention. As another implementation, the terminal may determine, from the multiple sequence resources, the first number of sequence resources based on a signaling indication from a network device.

In this embodiment, the terminal transmits feedback information using a sequence resource in the first number of sequence resources, where the feedback information is ACK feedback information or NACK feedback information corresponding to the downlink data, which is transmitted using a sequence selection mode.

A technical solution in the embodiment of the present invention is used to determine an appropriate sequence resource based on the number of scheduled codewords so that the terminal can transmit feedback information based on the determined sequence resource.

### Embodiment 2

An embodiment of the present invention further provides a resource allocation method. FIG. 2 is a schematic flowchart of a resource allocation method according to Embodiment 2 of the present invention; as shown in FIG. 2, the method includes:
Step 201: the terminal receives signaling sent by a network device, and determines, based on the signaling, at least one sequence resource set, where a number of sequence resources included in at least part of the at least one sequence resource set is related to a maximum number of codewords.
Step 202: the terminal receives downlink control signaling, and determines, based on a number of codewords scheduled by the downlink control signaling, a first number of sequence resources.
Step 203: the terminal transmits feedback information using a sequence resources in the first number of sequence resources.

In this embodiment, the receiving, by the terminal, the signaling sent by the network device, and the determining, based on the signaling, the at least one sequence resource set include: the terminal receiving downlink control signaling from the network device, and determining the at least one sequence resource set based on the downlink control signaling; or receiving high layer signaling from the network device, and determining the at least one sequence resource set based on the high layer signaling; where the high layer signaling may be specifically Radio Resource Control (RRC) signaling.

In this embodiment, the number of sequence resources included in at least part of the at least one sequence resource set determined by the terminal is related to the maximum number of codewords, that is, in one implementation, a number of sequence resources in each of the at least one sequence resource set is related to the maximum number of codewords; in another implementation, a number of sequence resources in part of the at least one sequence resource set is related to the maximum number of codewords.

The number of sequence resources included in each of at least part of sequence resource sets being related to the maximum number of codewords includes: the number of sequence resources included in each of at least part of sequence resource sets is 2^{N}, where N is the maximum number of codewords. That is, the number of sequence resources included in each of at least part of the at least one sequence resource set is 2^{N}. The maximum number of codewords being 2 is taken as an example, in an implementation, a number of sequence resources in each of the at least one sequence resource set is 4; in another implementation, a number of sequence resources in part of the at least one sequence resource set is 4, and a number of sequence resources in a remaining part of the sequence resource set is less than 4.

As a first implementation, the determining the first number of sequence resources includes: determining, by the terminal, one of the at least one sequence resource set based on a signaling indication from the network device; and determining, by the terminal, the first number of sequence resources in the sequence resource set. The terminal may determine at least part of sequence resources in the one sequence resource set as the first number of sequence resources, for example, determining all sequence resources in the one sequence resource set as the first number of sequence resources, for another example, determining part of sequence resources in the one sequence resource set as the first number of sequence resources.

As a second implementation, the determining the first number of sequence resources includes: dividing the sequence resource set into at least two groups of sequence resource subsets, where each group of sequence resource subsets includes the first number of resource sequences; selecting, by the terminal, a group of sequence resource subsets from the at least two groups of sequence resource subsets according to specific parameters. The specific parameters may include: terminal identification, and network device signaling. If the terminal selects a group of sequence resource subsets from the at least two groups of sequence resource subsets according to the terminal identification, the terminal may perform, based on the terminal identification, a calculation according to a preset calculation manner, select a group of sequence resource subsets from the at least two groups of sequence resource subsets based on calculation result mapping, and use sequence resources included in the one group of sequence resource subsets as the first number of sequence resources.

In a third implementation, the at least one sequence resource set includes a first part of sequence resource sets, and the number of sequence resources included in the first part of sequence resource sets is equal to the first number.

In this embodiment, the determining the first number of sequence resources includes: determining, by the terminal, the first number of sequence resources from the sequence resource set based on a signaling indication from the network device; or, determining, by the terminal, the first number of sequence resources from the sequence resource set based on a preset convention. In an actual application, there may be multiple sequence resources to be determined by the terminal; the terminal may determine, from the multiple sequence resources, the first number of sequence resources based on the number of codewords scheduled by the downlink control signaling. As an implementation, the terminal may determine the first number of sequence resources from the multiple sequence resources based on a preset convention; for example, the multiple sequence resources are numbered, if the number of scheduled codewords is 1, determine 2 sequence resources, a first sequence resource and a third sequence resource, or a second sequence resource and a fourth sequence resource may be selected from the multiple sequence resources based on a preset convention.

In this embodiment, the terminal transmits feedback information using a sequence resource in the first number of sequence resources, where the feedback information is ACK feedback information or NACK feedback information corresponding to the downlink data, which is transmitted using a sequence selection mode.

Embodiment 2 of the present invention will be described in detail below with reference to specific application scenarios.

### Scenario 1

The terminal receives downlink control signaling, and determines a sequence resource set {S0, S1, S2, S3} based on the downlink control signaling, where S0, S1, S2, and S3 respectively represent sequence resources. If the downlink control signaling currently received by the terminal schedules two codewords for transmission, it indicates that four sequence resources are needed, and the terminal may select the four sequence resources in the sequence resource set, and may transmit feedback information according to the manner in Table 1, that is, ACK feedback information is transmitted via two codewords in the sequence S0, and ACK feedback information is transmitted via a first codeword in the sequence S1 while NACK feedback information is transmitted via a second codeword in the sequence S1, NACK feedback information is transmitted via two codewords in the sequence S2, and NACK feedback information is transmitted via a first codeword in the sequence S3 while ACK feedback information is transmitted via a second codeword. If the downlink control signaling currently received by the terminal schedules one codeword for transmission, it indicates that two sequence resources are needed, the terminal may determine two resources S0 and S2 in the sequence resource set based on a pre-agreed rule, and transmit feedback information according to the manner in Table 2, that is, the sequence S0 is used to transmit ACK feedback information, and the sequence S2 is used to transmit NACK feedback information.

**Table 1**

| Transmission over 2 codewords | Sequence resource |
|---|---|
| ACK, ACK | S0 |
| ACK, NACK | S1 |
| NACK, ACK | S2 |
| NACK, NACK | S3 |

**Table 2**

| Transmission over 1 codeword | Sequence resource |
|---|---|
| ACK | S0 |
| - | S1 |
| NACK | S2 |
| - | S3 |

In this scenario, the terminal may determine a sequence resource set {S0, SI, S2, S3} among multiple sequence resource sets.

### Scenario 2

The terminal receives high layer signaling, determines, based on the high layer signaling, three sequence resource sets with four sequence resources for each sequence resource set, and further divides each sequence resource set into two subsets, where each subset includes 2 sequence resources.

The terminal receives downlink control signaling. When the downlink control signaling schedules two codewords for transmission, it indicates that four sequence resources are needed. The terminal determines one of the three sequence resource sets based on an indication from the downlink control signaling. The terminal transmits feedback information using the four sequence resources in the sequence resource set; for example, it may be determined based on Table 3 that feedback information is transmitted over the four sequence resources included in the sequence resource sets whose sequence set number is 0, 1, or 2;

When the downlink control signaling schedules one codeword for transmission, it indicates that two sequence resources are needed. The terminal determines one of the three sequence resource sets based on an indication from the downlink control signaling, and further determines a subset of the sequence resource set further based on the downlink control signaling., the terminal transmits feedback information using two sequence resources in the subset. For example, as shown in Table 3, if a sequence resource set whose sequence set number is 2 is determined, it may be determined that feedback information is transmitted over a sequence resource included in the first subset {S1, S4} or the second subset {S7, S10}.

**Table 3**

| sequence resource set number | sequence resource set | First subset | Second subset |
|---|---|---|---|
| 0 | {S0, S3, S6, S9} | {S0, S3} | {S6, S9} |
| 1 | {S1, S4, S7, S10} | {S1, S4} | {S7, S10} |
| 2 | {S2, S5, S8, S11} | {S2, S5} | {S8, S11} |

### Scenario 3

The terminal receives configuration signaling (which may be downlink control signaling or high layer signaling) sent by the network, and determines, multiple sequence resource sets based on the configuration signaling, where at least one of the multiple sequence resource sets includes two sequence resources, and a remaining sequence resource set of the multiple sequence resource sets includes four sequence resources. For details, reference may be made to Table 4.

The terminal receives downlink control signaling. When the downlink control signaling schedules two codewords for transmission, it indicates that four sequence resources are needed. The terminal determines one sequence resource set of the other sequence resource sets based on an indication from the downlink control signaling. For example, the terminal determines a sequence resource set corresponding to the sequence resource set numbered 1 or 0 in Table 4, and the terminal transmits the feedback information using four sequence resources in the sequence resource set;

When the downlink control signaling schedules one codeword for transmission, the terminal determines one of the at least one sequence resource set based on an indication from the downlink control signaling, for example, the terminal determines a sequence resource set corresponding to the sequence resource set numbered 2 or 3 in Table 4, and the terminal transmits feedback information using two sequence resources in the sequence resource set.

**Table 4**

| Sequence resource set number | Sequence resource set |
|---|---|
| 0 | {S0, S3, S6, S9} |
| 1 | {S1, S4, S7, S10} |
| 2 | {S2, S5 } |
| 3 | {S8, S11 } |

### Embodiment 3

An embodiment of the present invention further provides a resource allocation method. FIG. 3 is a schematic flowchart of a resource allocation method according to Embodiment 3 of the present invention; as shown in FIG. 3, the method includes:
Step 301: a terminal receives downlink control signaling, and determines, based on a number of codewords scheduled by the downlink control signaling, a first number of sequence resources of according to a preset sequence resource.
Step 302: The terminal transmits feedback information using a sequence resource in the first number of sequence resources.

In this embodiment, a maximum number of codewords for the terminal to transmit downlink data is N which is a positive integer greater than 1, indicating that the terminal can transmit downlink data using up to N codewords at the same time, but not always using N codewords, and the downlink data can be transmitted using a codeword of any value between 1 and N. For example, when the terminal's semi-static configuration uses 2 codewords to transmit downlink data, it indicates that the terminal can transmit downlink data using up to 2 codewords at the same time, and the terminal receives downlink control signaling to determine that 1 or 2 codewords are included in the scheduled downlink data.

In this embodiment, the first number is related to the number of scheduled codewords. As an implementation, the first number is equal to 2^{M}, where M is the number of scheduled codewords, for example, if the number of scheduled codewords is 1, the first number of sequence resources is 2; for another example, if the number of scheduled codewords is 2, the first number of sequence resources is 4.

In this embodiment, the terminal determines the starting sequence resource according to a signaling indication from a network device, that is, the starting sequence resource may be determined by the signaling indication.

In an actual application, there may be multiple sequence resources to be determined by the terminal, and the terminal determines, from the multiple sequence resources, the first number of sequence resources according to a preset sequence resource. Specifically, the terminal determining the first number of sequence resources according to the preset sequence resource includes: the terminal using the preset sequence resource as a starting sequence resource, and determining a sequence resource every second number of sequence resources starting from the starting sequence resource. As an implementation, the second number may be a fixed value, that is, the sequence resource distance between two adjacent sequence resources is the fixed value. As another implementation, the second number is equal to n* offset, n is equal to 0, 1, ..., (2^{M}-1), and M is the number of scheduled codewords. It can be understood that if the starting sequence resource is recorded as X and the offset can be recorded as offset, the determined first number of sequence resources may include: X, X+offset, X+2*offset, ..., X+(2^{M}-1)*offset to determine the first number of sequence resources.

In this embodiment, the terminal transmits feedback information using a sequence resource in the first number of sequence resources, where the feedback information is ACK feedback information or NACK feedback information corresponding to the downlink data, which is transmitted using a sequence selection mode.

A technical solution in the embodiment of the present invention is used to determine an appropriate sequence resource based on the number of scheduled codewords so that the terminal can transmit feedback information based on the determined sequence resource.

### Embodiment 4

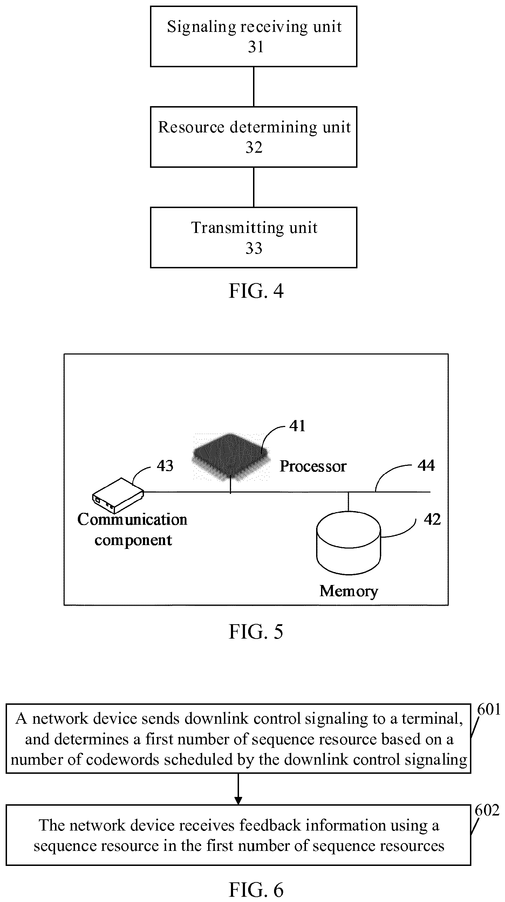

An embodiment of the present invention further provides a terminal. FIG. 4 is a schematic structural diagram illustrating composition of a terminal according to an embodiment of the present invention; as shown in FIG. 4, the terminal includes: a signaling receiving unit 31, a resource determining unit 32, and a transmitting unit 33;
where the signaling receiving unit 31 is configured to receive downlink control signaling;
the resource determining unit 32 is configured to determine, based on a number of codewords scheduled by the downlink control signaling received by the signaling receiving unit 31, a first number of sequence resources, where the first number is related to the number of scheduled codewords, and a maximum number of codewords for the terminal to transmit downlink data is N which is a positive integer greater than 1; and
the transmitting unit 33 is configured to transmit feedback information using a sequence resource in the first number of sequence resources determined by the resource determining unit 32.

Here, the first number is equal to 2^{M}, where M is the number of scheduled codewords.

As an implementation, the signaling receiving unit 31 is further configured to receive signaling sent by a network device before receiving the downlink control signaling; and
the resource determining unit 32 is further configured to determine, based on the signaling received by the signaling receiving unit 31, at least one sequence resource set, where a number of sequence resources included in at least part of the at least one sequence resource set is related to the maximum number of codewords.

Here, the number of sequence resources included in each of at least part of sequence resource sets is related to the maximum number of codewords.

Here, the number of sequence resources included in each of at least part of sequence resource sets is 2^{N}, where N is the maximum number of codewords.

As an implementation, the resource determining unit 32 is configured to determine, based on a signaling indication from the network device, one of the at least one sequence resource set; and determine the first number of sequence resources in the one sequence resource set.

As another implementation, the resource determining unit 32 is configured to divide the sequence resource set into at least two groups of sequence resource subsets, where each group of sequence resource subsets includes the first number of sequence resources; and select a group of sequence resource subsets from the at least two groups of sequence resource subsets according to specific parameters. The specific parameters include: terminal identification, and network device signaling.

In this embodiment, the at least one sequence resource set includes a first part of sequence resource sets, and the number of sequence resources included in the first part of sequence resource sets is equal to the first number.

In this embodiment, the resource determining unit 32 is configured to determine the first number of sequence resources from the sequence resource set based on a signaling indication from the network device; or determine the first number of sequence resources from the sequence resource set based on a preset convention.

As an implementation, the signaling receiving unit 31 is configured to receive downlink control signaling from the network device.

The resource determining unit 32 is configured to determine, based on the downlink control signaling received by the signaling receiving unit 31, the at least one sequence resource set.

As another implementation, the signaling receiving unit 31 is configured to receive high layer signaling from the network device; and
the resource determining unit 32 is configured to determine, based on the high layer signaling received by the signaling receiving unit 31, the at least one sequence resource set.

As an implementation, the resource determining unit 32 is configured to determine the first number of sequence resources according to a preset sequence resource.

The resource determining unit 32 is configured to use the preset sequence resource as a starting sequence resource, and determine a sequence resource every second number of sequence resources starting from the starting sequence resource.

The resource determining unit 32 is configured to determine the starting sequence resource according to a signaling indication received by the signaling receiving unit 31 from a network device.

In the embodiment of the present invention, the resource determining unit 32 in the terminal may be implemented by a central processing unit (CPU), a digital signal processor (DSP), a microcontroller unit (MCU,) or a field-programmable gate array (FPGA) of the terminal in an actual application; the signaling receiving unit 31 and the transmitting unit 33 in the terminal can be implemented by a communication module (including: a basic communication suite, an operating system, a communication module, a standardized interface, a protocol, etc.) and a transceiver antenna in an actual application.

It should be noted that, when the terminal provided in the above embodiment performs information processing, take the division of each of the above program modules as an example for description. In an actual application, the described processing may be allocated to be accomplished by different program modules as needed, that is, the internal structure of the terminal is divided into different program modules to perform all or part of the processing described above. In addition, the terminal and the resource allocation method embodiment provided in the foregoing embodiments are in the same concept, and specific implementation processes are described in the method embodiments, and details are not described herein again.

### Embodiment 5

An embodiment of the present invention further provides a terminal. FIG. 5 is a schematic structural diagram illustrating hardware of a terminal according to an embodiment of the present invention. As shown in FIG. 5, the terminal includes: a communication component 43 for performing data transmission, at least one processor 41, and a memory 42 for storing a computer program executable on the processor 41. Various components in the terminal are coupled together by a bus system 44. It will be appreciated that the bus system 44 is configured to implement connections and communications between these components. The bus system 44 includes, in addition to the data bus, a power bus, a control bus, and a status signal bus. However, for clarity of description, various buses are marked as the bus system 44 in FIG. 5.

It will be appreciated that the memory 42 may be either a volatile memory or a non-volatile memory, and also may include both a volatile memory and a non-volatile memory. The non-volatile memory may be a read only memory (ROM), a programmable read-only memory (PROM), or an erasable programmable read-only memory (EPROM), an electrically erasable programmable read-only memory (EEPROM), a ferromagnetic random access memory (FRAM), a flash memory, a magnetic surface memory, a CD, or a compact disc read-only memory (CD-ROM); the magnetic surface memory may be a disk memory or a tape memory. The volatile memory may be a random access memory (RAM) that acts as an external cache. By way of examples but of no limitation, many forms of RAM are available, such as a static random access memory (SRAM), a synchronous static random access memory (SSRAM), a dynamic random access memory (SSRAM), a dynamic random access memory (DRAM), a synchronous dynamic random access memory (SDRAM), a double data rate synchronous dynamic random access memory (DDRSDRAM), and an enhanced synchronous dynamic random access memory (ESDRAM), a SyncLink Dynamic Random Access Memory (SLDRAM), a direct rambus random access memory (DRRAM). The memory 42 described in the embodiment of the present invention is intended to include, but is not limited to, these and any other suitable types of memory.

The method disclosed in the foregoing embodiment of the present invention may be applied to the processor 41 or implemented by the processor 41. The processor 41 may be an integrated circuit chip with signal processing capabilities. In an implementation process, each step of the above method may be completed by an integrated logic circuit of hardware in the processor 41 or an instruction in a form of software. The processor 41 described above may be a general purpose processor, a DSP, or other programmable logic devices, discrete gate or transistor logic devices, discrete hardware components, or the like. The processor 41 can implement or perform the various methods, steps, and logic blocks disclosed in the embodiments of the present invention. The general purpose processor may be a microprocessor or any conventional processor or the like. The steps of the method disclosed in combination with the embodiment of the present invention may be directly implemented and performed by a hardware decoding processor, or performed by a combination of hardware and software modules in the decoding processor. The software module can reside in a storage medium located in the memory 42; the processor 41 reads information in the memory 42, and performs the steps of the foregoing method in conjunction with its hardware.

In an exemplary embodiment, the terminal may be implemented by one or more application specific integrated circuits (ASIC), DSPs, programmable logic devices (PLD), complex programmable logic devices (CPLD), FPGAs, general purpose processors, controllers, MCUs, microprocessors, or other electronic components, for performing the above methods.

In this embodiment, when executing the computer program, the processor 41 is configured to perform operations of: receiving downlink control signaling, and determining, based on a number of codewords scheduled by the downlink control signaling, a first number sequence resources, where the first number is related to the number of scheduled codewords, and a maximum number of codewords for the terminal to transmit downlink data is N which is a positive integer greater than 1; and transmitting feedback information using a sequence resource in the first number of sequence resources. In an embodiment, the first number is equal to 2^{M}, where M is the number of scheduled codewords.

As an implementation, when executing the computer program, the processor 41 is further configured to perform operations of: before the downlink control signaling is received, receiving signaling sent by a network device, and determining at least one sequence resource set based on the signaling, where a number of sequence resources included in at least part of the at least one sequence resource set is related to the maximum number of codewords.

As an implementation, when executing the computer program, the processor 41 is configured to perform operations of: determining one of the at least one sequence resource set based on a signaling indication from the network device; and determining the first number of sequence resources in the one sequence resource set.

In an embodiment, the number of sequence resources included in each of at least part of sequence resource sets is related to the maximum number of codewords.

In an embodiment, the number of sequence resources included in each of at least part of sequence resource sets is 2^{N}, where N is the maximum number of codewords.

As an implementation, when executing the computer program, the processor 41 is configured to perform an operation of: determining the first number of sequence resources from the sequence resource set based on a signaling indication from the network device; or determining the first number of sequence resources from the sequence resource set based on a preset convention.

As an implementation, when executing the computer program, the processor 41 is configured to perform operations of: dividing the sequence resource set into at least two groups of sequence resource subsets, where each group of sequence resource subsets includes the first number of sequence resources; and selecting a group of sequence resource subsets from the at least two groups of sequence resource subsets according to specific parameters. In an embodiment, the specific parameters include: terminal identification, and network device signaling.

In an embodiment, the at least one sequence resource set includes a first part of sequence resource sets, and the number of sequence resources included in the first part of sequence resource sets is equal to the first number.

As an implementation, when executing the computer program, the processor 41 is configured to perform operations of: receiving e downlink control signaling from the network device, and determining the at least one sequence resource set based on the downlink control signaling.

As an implementation, when executing the computer program, the processor 41 is configured to perform operations of: receiving high layer signaling sent from the network device, and determining, based on the high layer signaling, the at least one sequence resource set.

As an implementation, when executing the computer program, the processor 41 is configured perform an operation of: determining the first number of sequence resources according to a preset sequence resource.

As an implementation, when executing the computer program, the processor 41 is configured to perform operations of: using the preset sequence resource as a starting sequence resource, and determining a sequence resource every second number of sequence resources starting from the starting sequence resource.

As an implementation, when executing the computer program, the processor 41 is configured to perform an operation of: determining the starting sequence resource according to a signaling indication from the network device.

### Embodiment 6

An embodiment of the present invention further provides a computer storage medium, for example, including the memory 42 storing the computer program as shown in FIG. 5, and the described computer program can be executed by the processor 41 of the terminal to complete the steps of the foregoing method. The computer readable storage medium may be a memory such as the FRAM, the ROM, the PROM, the EPROM, the EEPROM, the Flash Memory, the magnetic surface memory, the optical disk, or the CD-ROM; or may be various devices including one or any combination of the above memories, such as a mobile phone, a computer, a tablet device, a personal digital assistant, etc.

The computer storage medium in the embodiment of the present invention is stored with a computer program which, when executed by the processor, performs operations of: receiving downlink control signaling, and determining, based on a number of codewords scheduled by the downlink control signaling, a first number of sequence resources, where the first number is related to the number of scheduled codewords, and a maximum number of codewords for the terminal to transmit downlink data is N which is a positive integer greater than 1; and transmitting feedback information using a sequence resource in the first number of sequence resources.

In an embodiment, the first number is equal to 2^{M}, where M is the number of scheduled codewords.

As an implementation, when executed by the processor, the computer program performs operations of: before the downlink control signaling is received, receiving signaling sent by a network device, and determining at least one sequence based on the signaling, where a number of sequence resources included in at least part of the at least one sequence resource set is related to the maximum number of codewords.

As an implementation, when executed by the processor, the computer program performs operations of: determining one of the at least one sequence resource set based on a signaling indication from the network device; and determining the first number of sequence resources in the one sequence resource set.

In an embodiment, the number of sequence resources included in each of at least part of sequence resource sets is related to the maximum number of codewords.

In an embodiment, the number of sequence resources included in each of at least part of sequence resource sets is 2^{N}, where N is the maximum number of codewords.

As an implementation, when executed by the processor, the computer program performs an operation of: determining the first number of sequence resources from the sequence resource set based on a signaling indication from the network device; or determining the first number of sequence resources from the sequence resource set based on a preset convention.

As an implementation, when executed by the processor, the computer program performs operations of: dividing the sequence resource set into at least two groups of sequence resource subsets, where each group of sequence resource subsets includes the first number of sequence resources; and selecting a group of sequence resource subsets from the at least two groups of sequence resource subsets according to specific parameters.

In an embodiment, the specific parameters include: terminal identification, and network device signaling.

In an embodiment, the at least one sequence resource set includes a first part of sequence resource sets, and the number of sequence resources included in the first part of sequence resource sets is equal to the first number.

As an implementation, when executed by the processor, the computer program performs operations of: receiving downlink control signaling from the network device, and determining the at least one sequence resource set based on the downlink control signaling.

As an implementation, when executed by the processor, the computer program performs operations of: receiving high layer signaling sent from the network device, and determining, based on the high layer signaling, the at least one sequence resource set.

As an implementation, when executed by the processor, the computer program performs an operation of: determining the first number of sequence resources according to a preset sequence resource.

As an implementation, when executed by the processor, the computer program performs operations of: using the preset sequence resource as a starting sequence resource, and determining a sequence resource every second number of sequence resources starting from the starting sequence resource.

As an implementation, when executed by the processor, the computer program performs an operation of: determining the starting sequence resource according to a signaling indication from a network device.

### Embodiment 7

An embodiment of the present invention further provides a resource allocation method. FIG. 6 is a schematic flowchart of a resource allocation method according to Embodiment 4 of the present invention; as shown in FIG. 6, the method includes:
Step 601: a network device sends downlink control signaling to a terminal, and determines a first number of sequence resource based on a number of codewords scheduled by the downlink control signaling, where the first number is related to the number of scheduled codewords, and a maximum number of codewords for the terminal to transmit downlink data is N which is a positive integer greater than 1.
Step 602: the network device receives feedback information using a sequence resource in the first number of sequence resources.

In this embodiment, a network device sends downlink control signaling to a terminal, and determines a first number of sequence resources based on the number of codewords scheduled by the downlink control signaling, where a maximum number of codewords for the terminal to transmit downlink data is N which is a positive integer greater than 1, indicating that the terminal can transmit downlink data using up to N codewords at the same time, but not always using N codewords, and the downlink data can be transmitted using a codeword of any value between 1 and N. For example, when the terminal's semi-static configuration uses 2 codewords to transmit downlink data, it indicates that the terminal can transmit downlink data using upt to 2 codewords at the same time, and the terminal receives downlink control signaling to determine that 1 or 2 codewords are included in the scheduled downlink data.

In this embodiment, the first number is related to the number of scheduled codewords. As an implementation, the first number is equal to 2^{M}, where M is the number of scheduled codewords, for example, if the number of scheduled codewords is 1, the first number of sequence resources is 2; for another example, if the number of scheduled codewords is 2, the first number of sequence resources is 4.

In an actual application, there may be multiple sequence resources to be used by the network device. In an implementation, before the determining the first number of sequence resources, the method further includes: determining, by the network device, at least one sequence resource set, where a number of sequence resources included in at least part of the at least one sequence resource set is related to the maximum number of codewords. It can be understood that the number of sequence resources in each of the at least one sequence resource set is related to the maximum number of codewords; or the number of sequence resources in part of the at least one sequence resource set is related to the maximum number of codewords.

The number of sequence resources included in each of at least part of sequence resource sets being related to the maximum number of codewords includes: the number of sequence resources included in each of at least part of sequence resource sets is 2^{N}, where N is the maximum number of codewords. That is, the number of sequence resources included in each of at least part of the at least one sequence resource set is 2^{N}. The maximum number of codewords being 2 is taken as an example, in an implementation, the number of sequence resources in each of the at least one sequence resource set is 4; in another implementation, the number of sequence resources in each of the at least one sequence resource set is 4, and the number of sequence resources in a remaining part of the sequence resource set is less than 4.

According to a first manner to determine the sequence resource is, the determining the first number of sequence resources includes: the network device determining one of the at least one sequence resource set; the network device determining the first number of sequence resourcesin the one sequence resource set.

According to a second manner to determine the sequence resource, the determining the first number of sequence resources includes: the network device dividing the sequence resource sets into at least two groups of sequence resource subsets, where each group of sequence resource subsets includes the first number of resource sequences; and selecting a group of sequence resource subsets from the at least two groups of sequence resource subsets according to specific parameters. The specific parameters may include: terminal identification, and network device signaling. If the network device selects a group of sequence resource subsets from the at least two groups of sequence resource subsets according to the terminal identification, the network device may perform, based on the terminal identification, a calculation according to a preset calculation manner, and select a group of sequence resource subsets from the at least two groups of sequence resource subsets based on calculation result mapping, and use sequence resources included in the one group of sequence resource subsets as the first number of sequence resources.

According to a third manner to determine the sequence resource, the at least one sequence resource set includes a first part of sequence resource sets and a second part of sequence resource sets; determining a first one of part of first sequence resource sets when the number of codewords scheduled by the downlink control signaling is the maximum number of codewords, where the number of sequence resources included in each of part of first sequence resource sets is related to the maximum number of codewords; determining a second one of part of second sequence resource sets when the number of codewords scheduled by the downlink control signaling is not the maximum number of codewords, where the number of sequence resources included in each of part of second sequence resource sets is related to the number of codewords.

As another implementation, the determining the first number of sequence resources includes: determining, by the network device, the first number of sequence resources according to a preset sequence resource. Specifically, the network device determining the first number of sequence resources according to the preset sequence resources includes:
The network device using the preset sequence resource as a starting sequence resource, and determining a sequence resource every second number of sequence resources starting from the starting sequence resource. As an implementation, the second number may be a fixed value, that is, the sequence resource distance between two adjacent sequence resources is the fixed value. As another implementation, the second number is equal to n* offset, n is equal to 0, 1, ..., (2^{M}-1), and M is the number of scheduled codewords. It can be understood that if the starting sequence resource is recorded as X and the offset can be recorded as offset, the determined first number of sequence resources may include: X, X+offset, X+2*offset, ..., X+(2^{M}-1)*offset to determine the first number of sequence resources.

In this embodiment, before the network device receives the feedback information using the sequence resource in the first number of sequence resources, the method further includes: the network device sending signaling to the terminal, where the signaling indicates the first number of sequence resources for transmitting the feedback information. The signaling may be downlink control signaling or high layer signaling, so that the terminal transmits, according to an indication from the signaling, feedback information using the first number of sequence resources.

In this embodiment, the network device transmits feedback information using a sequence resource in the first number of sequence resources , where the feedback information is ACK feedback information or NACK feedback information corresponding to the downlink data, which is transmitted using a sequence selection mode.

With a technical solution in the embodiment of the present invention, the network device determines an appropriate sequence resource based on the number of scheduled codewords, and receives feedback information according to the appropriate sequence resource, so that a network device part can receive the feedback information based on the determined sequence resource.

### Embodiment 8

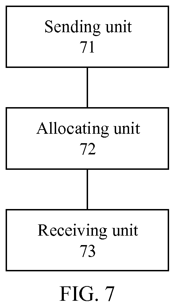

An embodiment of the present invention further provides a network device. FIG. 7 is a schematic structural diagram illustrating composition of a network device according to an embodiment of the present invention. As shown in FIG. 7, the network device includes a sending unit 71, an allocating unit 72, and a receiving unit 73.

The sending unit 71 is configured to send downlink control signaling to a terminal.

The allocating unit 72 configured to determine, based on a number of codewords scheduled by the downlink control signaling sent by the sending unit 71, a first number of sequence resources, where the first number is related to the number of scheduled codewords, and a maximum number of codewords for the terminal to transmit downlink data is N which is a positive integer greater than 1.

The receiving unit 73 is configured to receive feedback information using a sequence resource in the first number of sequence resources determined by the allocating unit 72.

In this embodiment, the first number is equal to 2^{M}, where M is the number of scheduled codewords.

As an implementation, the allocating unit 72 is further configured to determine at least one sequence resource set before determining the first number of sequence resources, where a number of sequence resources included in at least part of the at least one sequence resource set is related to the maximum number of codewords.

In an embodiment, the allocating unit 72 is configured to determine one of the at least one sequence resource set; and determine the first number of sequence resources in the one sequence resource set.

In an embodiment, the number of sequence resources included in each of at least part of sequence resource sets is related to the maximum number of codewords.

In an embodiment, the number of sequence resources included in each of at least part of sequence resource sets is 2^{N}, where N is the maximum number of codewords.

As an implementation, the allocating unit 72 is configured to determine the first number ofsequence resources from the sequence resource set; or determine the first number of sequence resources from the sequence resource set based on a preset convention.

As an implementation, the allocating unit 72 is configured to divide the sequence resource set into at least two groups of sequence resource subsets, where each group of sequence resource subsets includes the first number of sequence resources; and select a group of sequence resource subsets from the at least two groups of sequence resource subsets according to specific parameters. The specific parameters include: terminal identification, and network device signaling.

As an implementation, the at least one sequence resource set includes a first part of sequence resource sets and a second part of sequence resource sets; and the allocating unit 72 is configured to: determine a first one of part of first sequence resource sets when the number of codewords scheduled by the downlink control signaling is the maximum number of codewords, where the number of sequence resources included in each of part of first sequence resource sets is related to the maximum number of codewords; and determine a second one of part of second sequence resource sets when the number of codewords scheduled by the downlink control signaling is not the maximum number of codewords, where the number of sequence resources included in each of part of second sequence resource sets is related to the number of codewords. As an implementation, the sending unit 71 is further configured to send signaling to the terminal, where the signaling indicates the first number of sequence resources for transmitting the feedback information.

The sending unit 71 is configured to send downlink control signaling to the terminal, where the downlink control signaling indicates the first number of sequence resources for transmitting the feedback information, or is configured to send high layer signaling to the terminal, where the high layer signaling indicates the first number of sequence resources for transmitting the feedback information.

As another implementation, the allocating unit 72 is configured to determine the first number of sequence resources according to a preset sequence resources.

The allocating unit 72 is configured to use the preset sequence resource as a starting sequence resource, and determine a sequence resource every second number of sequence resources starting from the starting sequence resource.

In the embodiment of the present invention, the allocating unit 72 in the network device may be implemented by a CPU, a DSP, an MCU or an FPGA of the network device in an actual application; and the sending unit 71 and the receiving unit 73 in the network device can be implemented by a communication module (including: a basic communication suite, an operating system, a communication module, a standardized interface, a protocol, etc.) and a transceiver antenna in an actual application.

It should be noted that, when the network device provided in the above embodiment performs information processing, take the division of each of the above program modules as an example for description. In an actual application, the described processing may be allocated to be accomplished by different program modules as needed, that is, the internal structure of the network device is divided into different program modules to perform all or part of the processing described above. In addition, the network device and the resource allocation method embodiment provided in the foregoing embodiments are in the same concept, and specific implementation processes are described in the method embodiments, and details are not described herein again.

### Embodiment 9

An embodiment of the present invention further provides a network device. For the hardware component of the network device, reference may be made to the hardware structure of the terminal in FIG. 5. The network device includes: a communication component for performing data transmission, at least one processor, and a memory for storing a computer program executable on the processor. Various components in the terminal are coupled together by a bus system. It will be appreciated that the bus system is configured to implement connections and communications between these components. The bus system includes, in addition to the data bus, a power bus, a control bus, and a status signal bus.

In this embodiment, when executing the computer program, the processor is configured to perform operations of: sending downlink control signaling to a terminal, and determining, based on a number of codewords scheduled by the downlink control signaling, a first number of sequence resources, where the first number is related to the number of scheduled codewords, and a maximum number of codewords for the terminal to transmit downlink data is N which is a positive integer greater than 1; and receiving feedback information using a sequence resource in the first number of sequence resources.

The first number is equal to 2^{M}, where M is the number of scheduled codewords.

As an implementation, when executing the computer program, the processor is configured to perform operations of: before the first number of sequence resources are determined, determining at least one sequence resource set, where a number of sequence resources included in at least part of the at least one sequence resource set is related to the maximum number of codewords.

As an implementation, when executing the computer program, the processor is configured to perform operations of: determining one of the at least one sequence resource set; and determining the first number of sequence resources in the one sequence resource set.

The number of sequence resources included in each of at least part of sequence resource sets is related to the maximum number of codewords.

The number of sequence resources included in each of at least part of sequence resource sets is 2^{N}, where N is the maximum number of codewords.

As an implementation, when executing the computer program, the processor is configured to perform an operation of: determining the first number of sequence resources from the sequence resource set; or determining the first number of sequence resources from the sequence resource set based on a preset convention.

As an implementation, when executing the computer program, the processor is configured to perform operations of: dividing the sequence resource set into at least two groups of sequence resource subsets, where each group of sequence resource subsets includes the first number of sequence resources; and selecting a group of sequence resource subsets from the at least two groups of sequence resource subsets according to specific parameters. In an embodiment, the specific parameters include: terminal identification, and network device signaling.

As an implementation, when executing the computer program, the processor is configured to perform operations of: determining a first one of part of first sequence resource sets when the number of codewords scheduled by the downlink control signaling is the maximum number of codewords, where the number of sequence resources included in each of part of first sequence resource sets is related to the maximum number of codewords; and determining a second one of part of second sequence resource sets when the number of codewords scheduled by the downlink control signaling is not the maximum number of codewords, where the number of sequence resources included in each of part of second sequence resource sets is related to the number of codewords.

As an implementation, when executing the computer program, the processor is configured to perform an operation of: sending signaling to the terminal, where the signaling indicates the first number of sequence resources for transmitting the feedback information.

As an implementation, when executing the computer program, the processor is configured to perform an operation of: sending downlink control signaling to the terminal, where the downlink control signaling indicates the first number of sequence resources for transmitting the feedback information.

As an implementation, when executing the computer program, the processor is configured to perform an operation of: sending high layer signaling to the terminal, where the high layer signaling indicates the first number of sequence resources for transmitting the feedback information.

As an implementation, when executing the computer program, the processor is configured to perform an operation of: determining the first number of sequence resources according to a preset sequence resource.

When executing the computer program, the processor is configured to perform operations of: using the preset sequence resource as a starting sequence resource, and determining a sequence resource every second number of sequence resources starting from the starting sequence resource.

### Embodiment 10

An embodiment of the present invention further provides a computer storage medium, which may be a memory such as the FRAM, the ROM, the PROM, the EPROM, the EEPROM, the Flash Memory, the magnetic surface memory, the optical disk, or the CD-ROM; or may be various devices including one or a combination of the above memories, such as a mobile phone, a computer, a tablet device, a personal digital assistant, etc.

The computer storage medium in the embodiment is stored with a computer program which, when executed by the processor, performs operations of: sending downlink control signaling to a terminal, and determining, based on a number of codewords scheduled by the downlink control signaling, a first number of sequence resources, where the first number is related to the number of scheduled codewords, and a maximum number of codewords for the terminal to transmit downlink data is N which is a positive integer greater than 1; and receiving feedback information using a sequence resource in the first number of sequence resources. The first number is equal to 2^{M}, where M is the number of scheduled codewords.

As an implementation, when executed by the processor, the computer program performs operations of: before the first number of sequence resources is determined, determining at least one sequence resource set, where a number of sequence resources included in at least part of the at least one sequence resource set is related to the maximum number of codewords.

As an implementation, when executed by the processor, the computer program performs operations of: determining one of the at least one sequence resource set; and determining the first number of sequence resources in the one sequence resource set.

The number of sequence resources included in each of at least part of sequence resource sets is related to the maximum number of codewords.

The number of sequence resources included in each of at least part of sequence resource sets is 2^{N}, where N is the maximum number of codewords.

As an implementation, when executed by the processor, the computer program performs an operation of: determining the first number of sequence resources from the sequence resource set; or determining the first number of sequence resources from the sequence resource set based on a preset convention.

As an implementation, when executed by the processor, the computer program performs operations of: dividing the sequence resource set into at least two groups of sequence resource subsets, where each group of sequence resource subsets includes the first number of sequence resources; and selecting a group of sequence resource subsets from the at least two groups of sequence resource subsets according to specific parameters. In an embodiment, the specific parameters include: terminal identification, and network device signaling.

As an implementation, when executed by the processor, the computer program performs operations of: determining a first one of part of first sequence resource sets when the number of codewords scheduled by the downlink control signaling is the maximum number of codewords, where the number of sequence resources included in each of part of first sequence resource sets is related to the maximum number of codewords; and determining a second one of part of second sequence resource sets when the number of codewords scheduled by the downlink control signaling is not the maximum number of codewords, where the number of sequence resources included in each of part of second sequence resource sets is related to the number of codewords.

As an implementation, when executed by the processor, the computer program performs an operation of: sending signaling to a terminal, where the signaling indicates the first number of sequence resources for transmitting the feedback information.

As an implementation, when executed by the processor, the computer program performs an operation of: sending downlink control signaling to the terminal, where the downlink control signaling indicates the first number of sequence resources for transmitting the feedback information.

As an implementation, when executed by the processor, the computer program performs an operation of: sending high layer signaling to the terminal, where the high layer signaling indicates the first number of sequence resources for transmitting the feedback information.

As an implementation, when executed by the processor, the computer program performs an operation of: determining the first number of sequence resources according to a preset sequence resource.

When executed by the processor, the computer program performs operations of: using the preset sequence resource as a starting sequence resource, and determining a sequence resource every second number of sequence resources starting from the starting sequence resource.

In several embodiments provided in the present application, it should be understood that the disclosed terminal, network device, and method may be implemented in other manners. The terminal embodiments described above are only illustrative. For example, the division of units is only a logical function division. In actual implementation, there may be another division manner, for example, multiple units or components may be combined, or integrated into another system, or some features can be ignored or not executed. In addition, the mutual coupling, or direct coupling, or communication connection of the components shown or discussed herein may be implemented through some interfaces. The indirect coupling or communication connection between devices or units may be implemented in electrical, mechanical or other forms.

The units described above as separate components may or may not be physically separated, and the components displayed as the units may or may not be physical units, that is, may be located in one place or distributed to multiple network units; Some or all of the units may be selected according to actual needs to achieve the purpose of the solution of the embodiment.

In addition, functional units in each embodiment of the present invention may be integrated into one processing unit, or each unit may be separately used as one unit, or two or more units may be integrated into one unit; the integrated unit can be implemented in the form of hardware or in the form of hardware plus software functional units.

Those of ordinary skill in the art can understand that all or part of the steps of implementing the above method embodiments may be accomplished by using hardware related to the program instructions. The foregoing program may be stored in a computer readable storage medium, and when the program is executed, steps including the steps of the foregoing method embodiments are performed; and the foregoing storage medium includes various mediums capable of storing program codes, such as a mobile storage device, an ROM, an RAM, a magnetic disk, an optical disk, or the like.

Alternatively, the above integrated unit of the present invention may be stored in a computer readable storage medium if it is implemented in the form of a software function module and sold or used as an independent product. Based on such understanding, the technical solutions in the embodiments of the present invention in essence, or the part making a contribution to the prior art may be embodied in the form of a software product stored in a storage medium, including several instructions for enabling a computer device (which may be a personal computer, a server, a network device, etc.) to perform all or part of the methods described in various embodiments of the present invention. The foregoing storage medium includes various media that can store program codes, such as a mobile storage device, an ROM, an RAM, a magnetic disk, or an optical disk.

The above description is only a specific embodiment of the present invention, but the scope of the present invention is not limited thereto, and any changes or substitutions that those skilled in the art can easily think of within the technical scope of the present invention as claimed should be included in the scope of the present invention. Therefore, the scope of the present invention is determined by the scope of the appended claims.

## Claims

1. A resource allocation method for the transmission of ACK/NACK feedback information on a short Physical Uplink Control Channel, PUCCH, in a 5G communications system, comprising:
receiving (101, 202), by a terminal, downlink control signaling, and determining, based on a number of codewords scheduled by the downlink control signaling, a first number of sequence resources, wherein the first number is related to the number of scheduled codewords, and a maximum number of codewords for the terminal to receive downlink data is N which is a positive integer greater than 1; and
transmitting (102, 203), by the terminal, feedback information using a sequence resource in the first number of sequence resources;
wherein the first number being related to the number of scheduled codewords comprises:
the first number is equal to 2^{M}, wherein M is the number of scheduled codewords;
wherein before the receiving, by the terminal, the downlink control signaling, the method further comprises:
receiving, by the terminal, signaling sent by a network device, and determining, based on the signaling, at least one sequence resource set, wherein a number of sequence resources comprised in at least part of the at least one sequence resource set is related to the maximum number of codewords;
wherein the number of sequence resources comprised in each of at least one of sequence resource sets being related to the maximum number of codewords comprises:
the number of sequence resources comprised in each of at least one of sequence resource sets is 2^{N}, wherein N is the maximum number of codewords;
wherein the maximum number of codewords for the terminal refers to a maximum number of codewords for downlink data transmission according to a semi-static configuration of the terminal;
wherein the terminal determines a sequence resource subset out of one of the at least one sequence resource set based on a pre-agreed rule or based on an indication from the downlink control signaling, wherein the sequence resource subset contains a number of sequence resources equal to the first number;
wherein the terminal transmits the ACK/NACK feedback information using a sequence resource from the sequence resource subset.

2. A terminal for the transmission of ACK/NACK feedback information on a short Physical Uplink Control Channel, PUCCH, for use in a 5G communications system, the terminal comprising: a signaling receiving unit (31), a resource determining unit (32), and a transmitting unit (33); wherein
the signaling receiving unit (31) is configured to receive downlink control signaling;
the resource determining unit (32) is configured to determine, based on a number of codewords scheduled by the downlink control signaling received by the signaling receiving unit (31), a first number of sequence resources, wherein the first number is related to the number of scheduled codewords, and a maximum number of codewords for the terminal to receive downlink data is N which is a positive integer greater than 1; and
the transmitting unit (33) is configured to transmit feedback information using a sequence resource in the first number of sequence resources determined by the resource determining unit (32);
wherein the first number being related to the number of scheduled codewords comprises:
the first number is equal to 2^{M}, wherein M is the number of scheduled codewords;
wherein the signaling receiving unit (31) is further configured to receive signaling sent by a network device before receiving the downlink control signaling; and
the resource determining unit (32) is further configured to determine, based on the signaling received by the signaling receiving unit (31), at least one sequence resource set, wherein a number of sequence resources comprised in at least part of the at least one sequence resource set is related to the maximum number of codewords;
wherein the number of sequence resources comprised in each of at least one of sequence resource sets is 2^{N}, wherein N is the maximum number of codewords;
wherein the maximum number of codewords for the terminal refers to a maximum number of codewords for downlink data transmission according to a semi-static configuration of the terminal;
wherein the terminal determines a sequence resource subset out of one of the at least one sequence resource set based on a pre-agreed rule or based on an indication from the downlink control signaling, wherein the sequence resource subset contains a number of sequence resources equal to the first number;
wherein the terminal transmits the ACK/NACK feedback information using a sequence resource from the sequence resource subset.

3. The terminal according to claim 2, wherein the resource determining unit (32) is configured to determine, based on a signaling indication from the network device, one of the at least one sequence resource set; and determine the first number of sequence resources in the one sequence resource set.

4. The terminal according to claim 2, wherein the resource determining unit (32) is configured to determine the first number of sequence resources from the sequence resource set based on a signaling indication from the network device; or determine the first number of sequence resources from the sequence resource set based on a preset convention.

5. The terminal according to claim 2, wherein the resource determining unit (32) is configured to divide the sequence resource set into at least two groups of sequence resource subsets, wherein each group of sequence resource subsets comprises the first number of sequence resources; and select a group of sequence resource subsets from the at least two groups of sequence resource subsets according to specific parameters.

6. The terminal according to claim 2, wherein the at least one sequence resource set comprises a first part of sequence resource sets, and the number of sequence resources comprised in the first part of sequence resource sets is equal to the first number.

7. The terminal according to claim 2, wherein the signaling receiving unit (31) is configured to receive downlink control signaling from the network device; and
the resource determining unit (32) is configured to determine, based on the downlink control signaling received by the signaling receiving unit (31), the at least one sequence resource set.

8. The terminal according to claim 2, wherein the signaling receiving unit (31) is configured to receive high layer signaling from the network device; and
the resource determining unit (32) is configured to determine, based on the high layer signaling received by the signaling receiving unit (31), the at least one sequence resource set.

9. The terminal according to claim 2, wherein the resource determining unit (32) is configured to determine the first number of sequence resources according to a preset sequence resource.

10. The terminal according to claim 9, wherein the resource determining unit (32) is configured to use the preset sequence resource as a starting sequence resource, and determine a sequence resource every second number of sequence resources starting from the starting sequence resource.

11. The terminal according to claim 10, wherein the resource determining unit (32) is configured to determine the starting sequence resource according to a signaling indication received by the signaling receiving unit (31) from a network device.

## Patentansprüche

1. Ressourcenvergabeverfahren zur Übertragung von ACK/NACK-Rückmeldungsinformationen auf einem kurzen Physical Uplink Control Channel PUCCH in einem 5G-Kommunikationssystem, umfassend:
Empfangen (101, 202) von Abwärtsstrecken-Steuersignalisierung durch ein Endgerät und Bestimmen einer ersten Anzahl von Sequenzressourcen auf der Basis einer Anzahl von durch die Abwärtsstrecken-Steuersignalisierung eingeteilten Codewörtern, wobei die erste Anzahl mit der Anzahl eingeteilter Codewörter in Beziehung steht und eine maximale Anzahl von Codewörtern für das Endgerät zum Empfangen von Abwärtsstreckendaten N ist, das eine positive ganze Zahl größer als 1 ist; und
Senden (102, 203) von Rückmeldungsinformationen durch das Endgerät unter Verwendung einer Sequenzressource in der ersten Anzahl von Sequenzressourcen;
wobei das Inbeziehungstehen der ersten Anzahl mit der Anzahl eingeteilter Codewörter Folgendes umfasst:
die erste Anzahl ist gleich 2^{M}, wobei M die Anzahl eingeteilter Codewörter ist;
wobei das Verfahren vor dem Empfangen der Abwärtsstrecken-Steuersignalisierung durch das Endgerät ferner Folgendes umfasst:
Empfangen von durch eine Netzvorrichtung gesendeter Signalisierung durch das Endgerät und Bestimmen mindestens einer Sequenzressourcenmenge auf der Basis der Signalisierung, wobei eine in mindestens einem Teil der mindestens einen Sequenzressourcenmenge enthaltene Anzahl von Sequenzressourcen mit der maximalen Anzahl von Codewörtern in Beziehung steht;
wobei das Inbeziehungstehen der in jeder von mindestens einer von Sequenzressourcenmengen enthaltenen Anzahl von Sequenzressourcen mit der maximalen Anzahl von Codewörtern Folgendes umfasst:
die in jeder von mindestens einer von Sequenzressourcenmengen enthaltene Anzahl von Sequenzressourcen ist 2^{N}, wobei N die maximale Anzahl von Codewörtern ist;
wobei sich die maximale Anzahl von Codewörtern für das Endgerät auf eine maximale Anzahl von Codewörtern für Abwärtsstrecken-Datenübertragung gemäß einer semistatischen Konfiguration des Endgeräts bezieht;
wobei das Endgerät eine Sequenzressourcen-Teilmenge aus einer der mindestens einen Sequenzressourcenmenge auf der Basis einer im Voraus vereinbarten Regel oder auf der Basis einer Angabe aus der Abwärtsstrecken-Steuersignalisierung bestimmt, wobei die Sequenzressourcen-Teilmenge eine Anzahl von Sequenzressourcen gleich der ersten Anzahl enthält;
wobei das Endgerät die ACK/NACK-Rückmeldungsinformationen unter Verwendung einer Sequenzressource aus der Sequenzressourcen-Teilmenge sendet.

2. Endgerät zur Übertragung von ACK/NACK-Rückmeldungsinformationen auf einem kurzen Physical Uplink Control Channel PUCCH zur Verwendung in einem 5G-Kommunikationssystem, wobei das Endgerät Folgendes umfasst:
eine Signalempfangseinheit (31), eine Ressourcenbestimmungseinheit (32) und eine Sendeeinheit (33); wobei
die Signalempfangseinheit (31) ausgelegt ist zum Empfangen von Abwärtsstrecken-Steuersignalisierung;
die Ressourcenbestimmungseinheit (32) ausgelegt ist zum Bestimmen einer ersten Anzahl von Sequenzressourcen auf der Basis einer durch die Abwärtsstrecken-Steuersignalisierung, die durch die Signalisierungsempfangseinheit (31) empfangen wird, eingeteilten Anzahl von Codewörtern, wobei die erste Anzahl mit der Anzahl eingeteilter Codewörter in Beziehung steht und eine maximale Anzahl von Codewörtern für das Endgerät zum Empfangen von Abwärtsstreckendaten N ist, das eine positive ganze Zahl größer als 1 ist; und
die Sendeeinheit (33) ausgelegt ist zum Senden von Rückmeldungsinformationen unter Verwendung einer Sequenzressource in der durch die Ressourcenbestimmungseinheit (32) bestimmten ersten Anzahl von Sequenzressourcen;
wobei das Inbeziehungstehen der ersten Anzahl mit der Anzahl eingeteilter Codewörter Folgendes umfasst:
die erste Anzahl ist gleich 2^{M}, wobei M die Anzahl eingeteilter Codewörter ist;
wobei die Signalisierungsempfangseinheit (31) ferner ausgelegt ist zum Empfangen von Signalisierung, die durch eine Netzvorrichtung gesendet wird, bevor die Abwärtsstrecken-Steuersignalisierung empfangen wird; und
die Ressourcenbestimmungseinheit (32) ferner ausgelegt ist zum Bestimmen mindestens einer Sequenzressourcenmenge auf der Basis der Signalisierung, die durch die Signalisierungsempfangseinheit (31) empfangen wird, wobei eine in mindestens einem Teil der mindestens einen Sequenzressourcenmenge enthaltene Anzahl von Sequenzressourcen mit der maximalen Anzahl von Codewörtern in Beziehung steht;
wobei die in jeder von mindestens einer von Sequenzressourcenmengen enthaltene Anzahl von Sequenzressourcen 2^{N} ist, wobei N die maximale Anzahl von Codewörtern ist;
wobei sich die maximale Anzahl von Codewörtern für das Endgerät auf eine maximale Anzahl von Codewörtern für Abwärtsstrecken-Datenübertragung gemäß einer semistatischen Konfiguration des Endgeräts bezieht;
wobei das Endgerät eine Sequenzressourcen-Teilmenge aus einer der mindestens einen Sequenzressourcenmenge auf der Basis einer im Voraus vereinbarten Regel oder auf der Basis einer Angabe aus der Abwärtsstrecken-Steuersignalisierung bestimmt, wobei die Sequenzressourcen-Teilmenge eine Anzahl von Sequenzressourcen gleich der ersten Anzahl enthält;
wobei das Endgerät die ACK/NACK-Rückmeldungsinformationen unter Verwendung einer Sequenzressource aus der Sequenzressourcen-Teilmenge sendet.

3. Endgerät nach Anspruch 2, wobei die Ressourcenbestimmungseinheit (32) ausgelegt ist zum Bestimmen einer der mindestens einen Sequenzressourcenmenge auf der Basis einer Signalisierungsangabe von der Netzvorrichtung; und Bestimmen der ersten Anzahl von Sequenzressourcen in der einen Sequenzressourcenmenge.

4. Endgerät nach Anspruch 2, wobei die Ressourcenbestimmungseinheit (32) ausgelegt ist zum Bestimmen der ersten Anzahl von Sequenzressourcen aus der Sequenzressourcenmenge auf der Basis einer Signalisierungsangabe von der Netzvorrichtung; oder Bestimmen der ersten Anzahl von Sequenzressourcen aus der Sequenzressourcenmenge auf der Basis einer voreingestellten Konvention.

5. Endgerät nach Anspruch 2, wobei die Ressourcenbestimmungseinheit (32) ausgelegt ist zum Aufteilen der Sequenzressourcenmenge in mindestens zwei Gruppen von Sequenzressourcen-Teilmengen, wobei jede Gruppe von Sequenzressourcen-Teilmengen die erste Anzahl von Sequenzressourcen umfasst; und Auswählen einer Gruppe von Sequenzressourcen-Teilmengen aus den mindestens zwei Gruppen von Sequenzressourcen-Teilmengen gemäß spezifischen Parametern.

6. Endgerät nach Anspruch 2, wobei die mindestens eine Sequenzressourcenmenge einen ersten Teil von Sequenzressourcenmengen umfasst und die in dem ersten Teil von Sequenzressourcenmengen enthaltene Anzahl von Sequenzressourcen gleich der ersten Anzahl ist.

7. Endgerät nach Anspruch 2, wobei die Signalisierungsempfangseinheit (31) ausgelegt ist zum Empfangen von Abwärtsstrecken-Steuersignalisierung von der Netzvorrichtung; und
die Ressourcenbestimmungseinheit (32) ausgelegt ist zum Bestimmen der mindestens einen Sequenzressourcenmenge auf der Basis der durch die Signalisierungsempfangseinheit (31) empfangenen Abwärtsstrecken-Steuersignalisierung.

8. Endgerät nach Anspruch 2, wobei die Signalisierungsempfangseinheit (31) ausgelegt ist zum Empfangen von Signalisierung höherer Schichten von der Netzvorrichtung; und
die Ressourcenbestimmungseinheit (32) ausgelegt ist zum Bestimmen der mindestens einen Sequenzressourcenmenge auf der Basis der durch die Signalisierungsempfangseinheit (31) empfangenen Signalisierung höherer Schichten.

9. Endgerät nach Anspruch 2, wobei die Ressourcenbestimmungseinheit (32) ausgelegt ist zum Bestimmen der ersten Anzahl von Sequenzressourcen gemäß einer voreingestellten Sequenzressource.

10. Endgerät nach Anspruch 9, wobei die Ressourcenbestimmungseinheit (32) ausgelegt ist zum Verwenden der voreingestellten Sequenzressource als eine Startsequenzressource und Bestimmen einer Sequenzressource in jeder zweiten Anzahl von Sequenzressourcen, beginnend mit der Startsequenzressource.

11. Endgerät nach Anspruch 10, wobei die Ressourcenbestimmungseinheit (32) ausgelegt ist zum Bestimmen der Startsequenzressource gemäß einer Signalisierungsangabe, die durch die Signalisierungsempfangseinheit (31) von einer Netzvorrichtung empfangen wird.

## Revendications

1. Procédé d'attribution de ressources pour l'émission d'informations de rétroaction d'ACK/de NACK sur un canal physique de commande de liaison montante, PUCCH, court dans un système de communications 5G, comportant :
la réception (101, 202), par un terminal, d'une signalisation de commande de liaison descendante, et la détermination, d'après un nombre de mots de code programmés par la signalisation de commande de liaison descendante, d'un premier nombre de ressources de séquence, le premier nombre étant lié au nombre de mots de code programmés, et un nombre maximal de mots de code pour la réception par le terminal de données de liaison descendante étant N qui est un entier positif supérieur à 1 ; et
l'émission (102, 203), par le terminal, d'informations de rétroaction en utilisant une ressource de séquence parmi le premier nombre de ressources de séquence ;
le fait que le premier nombre soit lié au nombre de mots de code programmés étant **caractérisé en ce que** :
le premier nombre est égal à 2^{M}, M étant le nombre de mots de code programmés ;
le procédé comportant en outre, avant la réception, par le terminal, de la signalisation de commande de liaison descendante :
la réception, par le terminal, d'une signalisation envoyée par un dispositif de réseau, et la détermination, d'après la signalisation, d'au moins un ensemble de ressources de séquence, un nombre de ressources de séquence comprises dans au moins une partie de l'ensemble ou des ensembles de ressources de séquence étant lié au nombre maximal de mots de code ;
le fait que le nombre de ressources de séquence compris dans chaque ensemble d'au moins un des ensembles de ressources de séquence soit lié au nombre maximal de mots de code étant **caractérisé en ce que** :
le nombre de ressources de séquence compris dans chaque ensemble d'au moins un des ensembles de ressources de séquence est 2^{N}, N étant le nombre maximal de mots de code ;
le nombre maximal de mots de code pour le terminal désignant un nombre maximal de mots de code servant à la transmission de données de liaison descendante selon une configuration semi-statique du terminal ;
le terminal déterminant un sous-ensemble de ressources de séquence issu de l'ensemble ou de l'un des ensembles de ressources de séquence selon une règle convenue au préalable ou d'après une indication provenant de la signalisation de commande de liaison descendante, le sous-ensemble de ressources de séquence contenant un nombre de ressources de séquence égal au premier nombre ;
le terminal émettant les informations de rétroaction d'ACK/de NACK en utilisant une ressource de séquence issue du sous-ensemble de ressources de séquence.

2. Terminal servant à l'émission d'informations de rétroaction d'ACK/de NACK sur un canal physique de commande de liaison montante, PUCCH, court destiné à être utilisé dans un système de communications 5G, le terminal comportant :
une unité (31) de réception de signalisation, une unité (32) de détermination de ressources, et une unité (33) d'émission ;
l'unité (31) de réception de signalisation étant configurée pour recevoir une signalisation de commande de liaison descendante ;
l'unité (32) de détermination de ressources étant configurée pour déterminer, d'après un nombre de mots de code programmés par la signalisation de commande de liaison descendante reçue par l'unité (31) de réception de signalisation, un premier nombre de ressources de séquence, le premier nombre étant lié au nombre de mots de code programmés, et un nombre maximal de mots de code pour la réception par le terminal de données de liaison descendante étant N qui est un entier positif supérieur à 1 ; et
l'unité (33) d'émission étant configurée pour émettre des informations de rétroaction en utilisant une ressource de séquence parmi le premier nombre de ressources de séquence déterminé par l'unité (32) de détermination de ressources ;
le fait que le premier nombre soit lié au nombre de mots de code programmés étant **caractérisé en ce que** :
le premier nombre est égal à 2^{M}, M étant le nombre de mots de code programmés ;
l'unité (31) de réception de signalisation étant en outre configurée pour recevoir une signalisation envoyée par un dispositif de réseau avant de recevoir la signalisation de commande de liaison descendante ; et
l'unité (32) de détermination de ressources étant en outre configurée pour déterminer, d'après la signalisation reçue par l'unité (31) de réception de signalisation, au moins un ensemble de ressources de séquence, un nombre de ressources de séquence comprises dans au moins une partie de l'ensemble ou des ensembles de ressources de séquence étant lié au nombre maximal de mots de code ;
le nombre de ressources de séquence compris dans chaque ensemble d'au moins un des ensembles de ressources de séquence étant 2^{N}, N étant le nombre maximal de mots de code ;
le nombre maximal de mots de code pour le terminal désignant un nombre maximal de mots de code servant à la transmission de données de liaison descendante selon une configuration semi-statique du terminal ;
le terminal déterminant un sous-ensemble de ressources de séquence issu de l'ensemble ou de l'un des ensembles de ressources de séquence selon une règle convenue au préalable ou d'après une indication provenant de la signalisation de commande de liaison descendante, le sous-ensemble de ressources de séquence contenant un nombre de ressources de séquence égal au premier nombre ;
le terminal émettant les informations de rétroaction d'ACK/de NACK en utilisant une ressource de séquence issue du sous-ensemble de ressources de séquence.

3. Terminal selon la revendication 2, l'unité (32) de détermination de ressources étant configurée pour déterminer, d'après une indication de signalisation provenant du dispositif de réseau, l'ensemble ou un des ensembles de ressources de séquence ; et déterminer le premier nombre de ressources de séquence dans ledit ensemble de ressources de séquence.

4. Terminal selon la revendication 2, l'unité (32) de détermination de ressources étant configurée pour déterminer le premier nombre de ressources de séquence parmi l'ensemble de ressources de séquence d'après une indication de signalisation provenant du dispositif de réseau ; ou déterminer le premier nombre de ressources de séquence parmi l'ensemble de ressources de séquence d'après une convention préétablie.

5. Terminal selon la revendication 2, l'unité (32) de détermination de ressources étant configurée pour diviser l'ensemble de ressources de séquence en au moins deux groupes de sous-ensembles de ressources de séquence, chaque groupe de sous-ensembles de ressources de séquence comportant le premier nombre de ressources de séquence ; et sélectionner un groupe de sous-ensembles de ressources de séquence parmi lesdits au moins deux groupes de sous-ensembles de ressources de séquence selon des paramètres spécifiques.

6. Terminal selon la revendication 2, l'ensemble ou les ensembles de ressources de séquence comportant une première partie d'ensembles de ressources de séquence, et le nombre de ressources de séquence comprises dans la première partie d'ensembles de ressources de séquence étant égal au premier nombre.

7. Terminal selon la revendication 2, l'unité (31) de réception de signalisation étant configurée pour recevoir une signalisation de commande de liaison descendante provenant du dispositif de réseau ; et l'unité (32) de détermination de ressources étant configurée pour déterminer, d'après la signalisation de commande de liaison descendante reçue par l'unité (31) de réception de signalisation, l'ensemble ou les ensembles de ressources de séquence.

8. Terminal selon la revendication 2, l'unité (31) de réception de signalisation étant configurée pour recevoir une signalisation de couche haute provenant du dispositif de réseau ; et
l'unité (32) de détermination de ressources étant configurée pour déterminer, d'après la signalisation de couche haute reçue par l'unité (31) de réception de signalisation, l'ensemble ou les ensembles de ressources de séquence.

9. Terminal selon la revendication 2, l'unité (32) de détermination de ressources étant configurée pour déterminer le premier nombre de ressources de séquence selon une ressource de séquence prédéfinie.

10. Terminal selon la revendication 9, l'unité (32) de détermination de ressources étant configurée pour utiliser la ressource de séquence prédéfinie comme ressource de séquence de début, et déterminer une ressource de séquence tous les deux nombres de ressources de séquence en partant de la ressource de séquence de début.

11. Terminal selon la revendication 10, l'unité (32) de détermination de ressources étant configurée pour déterminer la ressource de séquence de début selon une indication de signalisation reçue par l'unité (31) de réception de signalisation en provenance d'un dispositif de réseau.
